# EUROPÄISCHE PATENTSCHRIFT

(11) **EP 1 929 328 B1**
(45) Veröffentlichungstag und Bekanntmachung des Hinweises auf die Patenterteilung: **04.05.2011**
(21) Anmeldenummer: 05802561.0
(22) Anmeldetag: 28.09.2005
(51) Int. Cl.: G01S 7/481

(54) **VORRICHTUNG ZUR ERHÖHUNG DER MESSGENAUIGKEIT UND -ENTFERNUNG FÜR EIN SCANNENDES LASERENTFERNUNGSMESSGERÄT**
APPARATUS FOR INCREASING THE MEASUREMENT ACCURACY AND RANGE FOR A SCANNING LASER RANGEFINDER
DISPOSITIF POUR AUGMENTER LA PRECISION ET LA DISTANCE DE MESURE D'UN APPAREIL TELEMETRIQUE LASER A BALAYAGE

(43) Veröffentlichungstag der Anmeldung: 11.06.2008
(73) Patentinhaber: Trimble Germany GmbH, 06116 Halle (Saale) (DE)
(72) Erfinder: ILLMANN, Uwe, 06118 Halle/S (DE)
(74) Vertreter: Gulde Hengelhaupt Ziebig & Schneider
(86) Internationale Anmeldenummer: PCT/DE2005/001731
(87) Internationale Veröffentlichungsnummer: WO 2007/036172

(56) Entgegenhaltungen:
- GB-A- 2 403 861
- US-A- 5 808 727

## Beschreibung

Die Erfindung betrifft ein scannendes Laserentfernungsmessgerät.

Durch die getrennte Anordnung von Sende- und Empfangskanal eines Laserscanners und besondere konstruktive Maßnahmen an einem internen Umlenkelement für den Empfangskanal und unter Beifügung eines prismatischen Elementes vor der Linse des Scanners sowie weiterer Vereinfachungen ist es möglich, Messfehler weitgehend auszuschalten, die durch unerwünschte Rückstreuung im optischen System durch Staubpartikel am Scannerfenster oder Staubpartikel im Nahbereich einer zu scannenden Messaufnahme verursacht werden.

Die Vorrichtung kann eine Gruppe von Pulsen oder eine gepulste Welle bezüglich der Laufzeit zur Bildung eines Grobmaßstabes auswerten, wobei eine genaue Zeitinformation bzw. Wegstrecke, die einen Feinmaßstab bildet, dann wie bei einer Phasendifferenzmessung die Phasenlage zwischen einem ausgesendeten Signal und dem empfangenen Signal und dem empfangenem Signal messen. Dabei kann die Phasenlage von Impulsen innerhalb einer Impulsgruppe oder einer Welle, mit welcher ein entsprechender Impuls zu modulieren ist, ausgewertet werden.

Die gemäß dem Stand der Technik bekannten Lasermesseinrichtungen unterscheiden sich hinsichtlich der Anordnung von Sende- und Empfangskanal. Dabei existieren im Wesentlichen 2 Varianten, wenn man die Lage der optischen Achsen von Sende- und Empfangskanal betrachtet. Bei den Vorrichtungen, wo der Sende- und Empfangskanal nebeneinander angeordnet sind, verlaufen die Achsen in einem definierten Abstand parallel zueinander, wie in der Patentschrift DE 198 60 464 C2 beschrieben. Nur die Weiterbildung einer solchen Anordnung können die unerwünschten Effekte der Rückstreuung in der Optik und von Partikeln im Nahbereich eines Lasermessgerätes weitestgehend ausschalten, wenn eine scannende Messung für einen großen Messbereich mit kleinem Laserstrahldurchmesser erforderlich ist.

In der zweiten Gruppe der bekannten Lasermesseinrichtungen sind der Sende- und Empfangskanal koaxial (auf gleicher Achse liegend) angeordnet.

In der Weise wird eine Lösung gemäß EP 08 43 180 B1 vorgeschlagen. Der Vorteil der koaxialen Anordnung besteht im Wesentlichen in der fehlenden Parallaxe.

Dadurch wird bei wechselnder Messentfernung vermieden, dass sich die Abbildung des abtastenden Laserflecks quer zur optischen Achse des Empfangskanals verschiebt. Das bedeutet, dass eine Erfassung des Laserflecks durch den Empfänger, insbesondere bei kleinen Empfängerflächen, weitestgehend unabhängig von der Messentfernung ist.

Der Nachteil dieser Anordnung besteht jedoch im optischen Übersprechen der beiden Kanäle, welches bereits innerhalb der Scannvorrichtung an optischen Elementen (z. B. durch Staubpartikel am Scannerfenster) und besonders im Nahbereich durch Rückstreuung an Staubpartikeln entstehen kann. Damit das Messen mit einer derartigen Anordnung möglich ist, wird entweder auf Elemente mit möglicher Rückstreuung verzichtet (z. B. ohne Scannerfenster bei dem 3D-Laserscanner HDS 4500 der Fa. Leica) oder mit einem Laserstrahl größeren Austrittsdurchmesser gearbeitet (z. B. 2D-Laserscanner LMS 200 der Fa. Sick) analog der in EP 08 43 180 B1 aufgezeigten Lösung. Aufgrund des Übersprechens wird die Messempfindlichkeit des Systems verringert. Ein weiterer Nachteil ist aufgrund der fehlenden Unterscheidung zwischen Nah- und Fernbereich, dass der Empfänger einen hohen Dynamikbereich verarbeiten muss und es zu einer Übersteuerung der Auswerteelektronik kommen kann.

Nach EP 09 70 292 D1 ist ein Messverfahren unter Einbeziehung der Lasertechnik für dreidimensionale Objekte bekannt, mit dessen Hilfe insbesondere für Innen-/Hohlräume eine automatisierte, optische Vermessung und eine computergestützte Auswertung erfolgt. Weiterhin wird gleichzeitig eine komplette Visualisierung des 3D-Raumes aus digitalisierten Messwerten vorgenommen. Parallel zur Rundummessung mit einem Laserscanner wird der zu vermessende Raum mit einer Digitalkamera erfasst, um im Rahmen des Arbeitsganges "Auswerten der Messdaten" und beim eventuellen Nacharbeiten der Objektdaten zusätzliche Informationen zu liefern. Bei der Präsentation der Objektdaten werden fotorealistische Darstellungen ergänzend erzeugt.

Der Laserscanner arbeitet nach dem Prinzip der Pulslaufzeitmessung in herkömmlichem Sinn, wobei die vorgenannten Messfehler im Nahbereich technisch nicht auszuschließen sind und es daher mittels der Auswertungssoftware im beschriebenen Verfahren zu einem statistischen Ausgleich kommen muss.

Weiterhin ist nach US 5,808,727 A ein fahrbares optisches Radarmessgerät bekannt. Bei dieser Lösung ist an einer hohlen Welle ein Licht emittierendes Element angebracht, das mit einem Pulsmotor Wirkverbindung steht. Eine Spiegelanordnung, bestehend aus Sende- und Empfangsspiegel, ist am anderen Ende der Hohlwelle befestigt. Ein Licht aufnehmendes Element befindet sich im Brennpunkt des Empfangsspiegels. Ein Lichtsendestrahl, der von einem Licht emittierenden Element ausgestrahlt wird und durch eine Linse zu einem Lichtsendespiegel geführt wird, gelangt schließlich mit voller Kapazität in den hohlen Wellenbereich. Der Strahl wird vom vermessenen Objekt reflektiert, im Gerät fokussiert und über den Lichtempfangsspiegel von einem Licht aufnehmenden Element erfasst.

Nach GB 2 403 861 A ist ferner noch ein Laserscann- und -messsystem bekannt. Das System enthält ein Laserscann- und Datenanalysegerät in kombinierter Form. Letzteres analysiert Datensignale vom Scanner zur Bestimmung der Entfernung und Präsenz eines Objekts. Das System verfügt über eine Öffnung, die korrespondierend zwischen dem Scanner und dem Analysegerät wirkt. Dadurch werden nur eine bestimmte Menge reflektierter Signale registriert und analysiert.

Die dem Stand der Technik beispielhaft entnommenen Lösungen der Impulslaufzeit- und Phasendifferenzmessung vermögen es nicht für einen großen Messbereich optimale Messwertaufnahmen zu erzielen, ohne zusätzliche Maßnahmen der Korrektur bei der Auswertung der Messergebnisse durchführen zu müssen bzw. die geforderte Messentfernung mit einer für Vermessungszwecke zulässigen Laserklasse zu erreichen. Dies gelingt insbesondere auch nicht durch eine aufwendig herzustellende modifizierte Einzeilinse mit ihrem primären und sekundären Linsenbereich, letzterer weist eine gleichschenkelige, trapezförmige Gestalt auf, die im Empfangsobjektiv des Empfangskanals gemäß DE 198 60 464 C2 angeordnet ist.

Der Erfindung liegt daher die Aufgabe zugrunde, eine Vorrichtung vorzuschlagen, um Messwertaufnahmen über die Empfangsoptik des Laserscanners auch für einen großen Messbereich in hoher Qualität, ohne die unerwünschte Rückstreuung - verursacht durch Staubpartikel am Scannerfenster und in der Luft des Nahbereiches - zu erzielen, wobei dies mittels einer verbesserten technischen Ausbildung eines Umlenkelementes im Strahlengang des Empfangskanals oder eines weiteren prismatischen Elementes vor oder hinter diesem Umlenkelement konstruktiv zu lösen ist.

Erfindungsgemäß wird die Aufgabe wie folgt gelöst, wobei hinsichtlich der grundlegenden erfinderischen Gedanken auf den Patentanspruch 1 verwiesen wird. Die weitere Ausgestaltung der Erfindung ergibt sich aus den Patentansprüchen 2 bis 7.

Zur erfindungsgemäßen Lösung sollen weitere Erläuterungen folgen.

Im Strahlengang eines Empfangskanals der Vorrichtung befindet sich vor einer Linse des Laserscanners ein an einer Hohlwelle angebrachtes Umlenkelement, welches über einen mit der Hohlwelle gekoppelten Antrieb drehbar ist. Das Umlenkelement weist in seinem oberen und unteren Randhereich jeweils eine zylindrische Krümmung auf, um bezüglich der Bildlage im Nahbereich Rückreflexe vom Messobjekt für einen Teilbereich des Öffnungswinkels der Linse zu korrigieren. Hinter einer Trennwand für einen Sende- und einen Empfangskanal befindet sich in der Hohlwelle ein Umlenkelement zur Ablenkung des aus beispielsweise einem Laserkollimator mit Faserkopplung emittierten Laserstrahles. Der von diesem Umlenkelement um 90° abgelenkte und somit aus der Vorrichtung ausgesandte Laserstrahl tritt durch eine Öffnung der Hohlwelle und erfasst ein entsprechendes Objekt. Über die Rotation der Hohlwelle wird an dieser Stelle ein Strahlfächer erzeugt, wobei ein geringer Teil des in das Gerät zurückreflektierten Laserstrahles mittels eines unterhalb der beiden Umlenkelemente angeordneten dämpfenden Umlenkelementes - als Referenzreflexionsstrecke wirkend - kompensiert wird.

Das in seinen Randbereichen zylindrisch gekrümmte Umlenkelement erfasst die vom auszumessenden Objekt reflektierenden Signale für den Empfangskanal und führt sie über die Linse des Laserscanners und einer weiteren davor positionierten Korrekturlinse (prismatisches Element) in einen Fotoempfänger. Die Korrekturlinse dient zum Ausgleich von Rückreflexen für einen Teilbereich der Linse des Laserscanners bezüglich ihres Öffnungswinkels, wodurch auf die zylindrische Krümmungen am Umlenkelement verzichtet werden kann.

Nach dem Laserkollimator mit Faserkopplung kann ein Monitorempfänger in Verbindung mit einem Reflexelement angeordnet sein.

Weitere Varianten der gerätetechnischen Ausbildung werden in Ausführungsbeispielen der Erfindung erläutert.

Die Erfindung soll nachfolgend an weiteren Ausführungsbeispielen näher erläutert werden. Dabei wird auf nachstehend genannte Figuren zurückgegriffen.
- Figur 1:: Vorrichtung mit auf einer Hohlwelle angesetzten und einem integrieren Umlenkelement und einem zusätzlichen prismatischen Element
- Figur 2:: Vorrichtung mit einem zwischen einer Linse des Laserscanners und einem Umlenkelement für den Empfangskanal angeordneten selektiven Spiegel

Die im Einzelnen verwendeten Bezugszeichen bedeuten:
1 - Fotoempfänger
2 - prismatisches Element
3 - Linse des Scanners
4 - Umlenkelement für Empfangskanal
5 - gekrümmter (zylindrischer) Randbereich
6 - Hohlwelle
7 - Trennwand
8 - Umlenkelement für Sendekanal
9 - Antrieb
10 - Reflexelement
11 - Monitorempfänger
12 - Laserkollimator
13 - emittierter Laserstrahl
14 - dämpfendes Umlenkelement
15 - reflektierte Laserstrahlung
16 - selektiver Spiegel
17 - Farbkamera

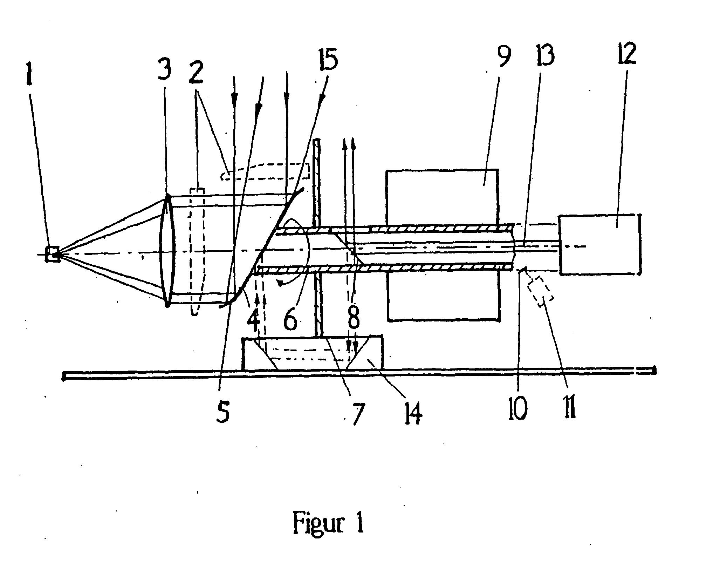

Vor der Linse 3 des Laserscanners befindet sich gemäß Figur 1 an einer motorisch drehbaren Hohlwelle 6 das Umlenkelement für den Empfangskanal 4, welches wie die weiteren Umlenkelemente für den Sendekanal 8 als Spiegel oder Prisma, vorteilhafter Weise jedoch jeweils als Pentagonalprisma ausgebildet ist. Das genannte Umlenkelement 4 ist in seinen Randbereichen wechselseitig zylindrisch gekrümmt ausgeformt. Im Inneren der Hohlwelle 6 ist in deren hinterem Drittel das Umlenkelement für den Sendekanal 8 gegenüber einer Öffnung in der Hohlwelle 6 positioniert, welches den emittierten Laserstrahl 13 um 90° umlenkt und über die Rotation der mittels eines Antriebes 9 drehbaren Hohlwelle 6 einen Strahlfächer (hier nicht näher dargestellt) zur Abtastung eines zu scannenden Objektes erzeugt und einen Erfassungswinkel in vertikaler Ausrichtung von über 180° im Raum ermöglicht. Die reflektierte Laserstrahlung 15 wird über das Umlenkelement für den Empfangskanal 4 einem nach- oder vorgeordneten prismatischen Element 2 (optional) und über die Linse des Scanners 3 in einen Fotoempfänger 1 geführt. Zur Bildung einer internen Referenzstrecke, die der Kompensation von internen Laufzeiten dient, befindet sich unterhalb der Umlenkelemente 4, 8 mittig gegenüber der Trennwand 7 ein dämpfendes Umlenkelement 14.

Optisch kann hinter dem Laserkollimator 12 ein Monitorempfänger 11 und ein Reflexelement 10 vorgesehen werden. Der Monitorempfänger 11 wird zur Regelung der Laserdiode und zur Kompensation interner Laufzeiten und Intensitätsschwankungen der Laserquelle verwendet.

Der Vorteil von Figur 1 gegenüber den existierenden scannenden Lasermesssystemen besteht darin, dass der Sende- und Empfangskanal optisch getrennt sind und gleichzeitig ein Scannbereich von über 180° erreicht werden kann. Dadurch wird es möglich, mit kleinen Messstrahldurchmessern in einem großen Winkelbereich zu messen, ohne dass zusätzliche Schwenkmechanismen benötigt werden, um den Messbereich abzudecken. Aufgrund des kleineren Messstrahldurchmessers können die Messobjekte genauer erfasst werden.

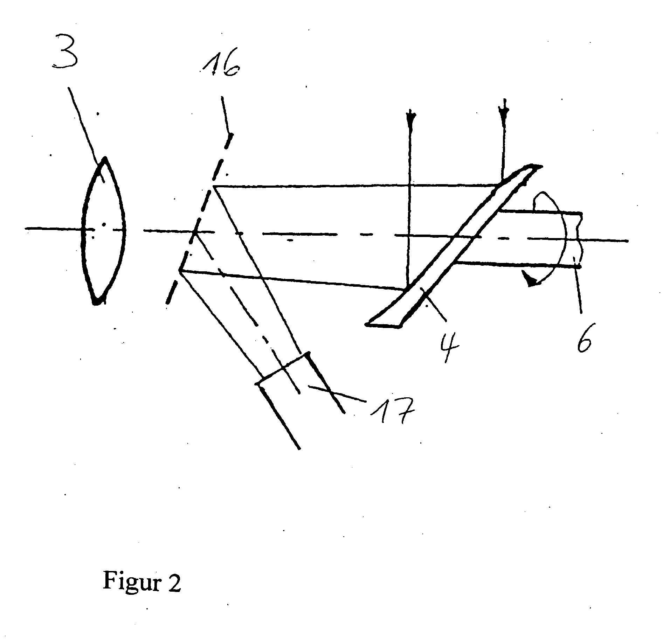

Nach Figur 2, die eine Modifizierung von Figur 1 bietet, befindet sich zwischen der Linse des Scanners 3 und einem Umlenkelement für den Empfangskanal 4 ein selektiver Spiegel 16, der vornehmlich die verwendete Laserwellenlänge durchlässt und die übrige Strahlung auf ein Kameraobjektiv einer Farbkamera 17 reflektiert. Die Farbkamera 17 kann eingesetzt werden, um die Scannpunkte mit den Originalfarben des Objektes zu ergänzen, womit sich im Folgenden ein farbiges 3D-Modell der gescannten Objekte erzeugen lässt.

## Patentansprüche

1. Scannendes Laserentfernungsmessgerät mit
- einem Sendekanal und einem Empfangskanal, die durch eine Trennwand.(7) getrennt sind;
- einer drehbaren Hohlwelle (6), der durch die Trennwand läuft, wobei ein Teil der Hohlwelle zum Sende kanal und der gegenüberliegende Teil zum Empfangskanal gehört;
- einer Linse (3) und einem Fotoempfänger (1), die im Empfangskanal vorhanden sind;
- einem Umlenkelement (4) im Empfangskanal, das an der drehbaren Hohlwelle (6) angebracht ist und sich dabei zwischen der Linse und der Trennwand (7) befindet;
- einem Laserkollimator (12), der im Sendekanal vorhanden ist;
- einem Umlenkelement (8) im Sendekanal, das in der drehbaren Hohlwelle (6) angebracht ist und sich dabei zwischen der Trennwand (7) und dem Laserkollimator (12) befindet,
- wobei die Hohlwelle (8) eine Öffnung aufweist, durch welche einer vom Laserkollimator in die Hohlwelle (6) eingespeiste und durch das Umlenkelement für den Sendekanal um 90°umgelenkte Laserstrahl ausgesendet wird;
- wobei die reflektierte Laserstrahlung (15) über die Fläche des Umlenkelementes (4) für den Empfangskanal mit der Linse des Scanners (3) in Wirkverbindung tritt und im Bildbereich des Fotoempfängers (1) fällt.

2. Scannendes Laserentfernungsmessgerät nach Anspruch 1,
**gekennzeichnet dadurch, dass**
das Umlenkelement für den Empfangskanal (4) mit gekrümmten, zylindrischen Randbereichen (5) versehen ist.

3. Scannendes Laserentfernungsmessgerät nach Anspruch 1,
**gekennzeichnet dadurch, dass**
die Umlenkelemente für den Empfangs- und Sendekanal (4, 8) die Gestalt jeweils eines Spiegels oder Prismas besitzen.

4. Scannendes Laserentfernungsmessgerät nach Anspruch 3,
**gekennzeichnet dadurch, dass**
die Umlenkelemente für den Empfangs- und Sendekanal (4, 8) Pentagonalprismen sind.

5. Scannendes Laserentfernungsmessgerät nach Anspruch 1,
**gekennzeichnet dadurch, dass**
mittig, unterhalb der Trennwand (7) gelegen, ein dämpfendes Umlenkelement (14) angeordnet ist.

6. Scannendes Laserentfernungsmessgerät nach Anspruch 1,
**gekennzeichnet dadurch, dass**
vor oder hinter dem Umlenkelement für den Empfangskanal (4) ein prismatisches Element (2) vorgesehen ist.

7. Scannendes Laserentfernungsmessgerät nach Anspruch 1,
**gekennzeichnet dadurch, dass**
zwischen der Linse des Scanners (3) und dem Umlenkelement für den Empfangskanal (4) ein selektiver Spiegel (16) angeordnet ist, der in Wirkverbindung mit einer Farbkamera (17) steht.

## Claims

1. A scanning laser rangefinder comprising
- a transmission channel and a receiving channel which are separated by a separating wall (7);
- a rotatable hollow shaft (6) which passes through the separating wall, wherein a part of the hollow shaft belongs to the transmission channel and the opposite part belongs to the receiving channel;
- a lens (3) and a photoreceiver (1) which are provided within the receiving channel;
- a deflection element (4) within the receiving channel, which deflection element is affixed to the rotatable hollow shaft (6) and is located between the lens and the separating wall (7);
- a laser collimator (12) which is provided within the transmission channel;
- a deflection element (8) within the transmission channel, which deflection element is affixed within the rotatable hollow shaft (6) and is located between the separating wall (7) and the laser collimator (12),
- wherein the hollow shaft (8) has an opening through which a laser beam is emitted which has been supplied into the hollow shaft (6) by the laser collimator and deflected by 90° by the deflection element for the transmission channel;
- wherein the reflected laser radiation (15) passes over the surface of the deflection element (4) for the receiving channel and then interacts with the lens of the scanner (3) and is incident in the image area of the photoreceiver (1).

2. A scanning laser rangefinder according to claim 1,
**characterized in that**
the deflection element for the receiving channel (4) is provided with curved, cylindrical edge areas (5).

3. A scanning laser rangefinder according to claim 1,
**characterized in that**
the deflection elements for the receiving and transmission channels (4, 8) each have the shape of a mirror or a prism.

4. A scanning laser rangefinder according to claim 3,
**characterized in that**
the deflection elements for the receiving and transmission channels (4, 8) are pentagonal prisms.

5. A scanning laser rangefinder according to claim 1,
**characterized in that**
an attenuating deflection element (14) is arranged so as to be located centrally, beneath the separating wall (7).

6. A scanning laser rangefinder according to claim 1,
**characterized in that**
a prismatic element (2) is provided before or behind the deflection element for the receiving channel (4).

7. A scanning laser rangefinder according to claim 1,
**characterized in that**
a selective mirror (16) which interacts with a colour camera (17) is arranged between the lens of the scanner (3) and the deflection element for the receiving channel (4).

## Revendications

1. Appareil télémétrique laser à balayage, avec
- un canal d'émission et un canal de réception, qui sont séparés par une cloison de séparation (7) ;
- un arbre creux (6) rotatif qui traverse la cloison de séparation, une partie de l'arbre creux faisant partie du canal d'émission et la partie opposée faisant partie du canal de réception ;
- une lentille (3) et un photorécepteur (1) qui sont présents dans le canal de réception ;
- un élément de déviation (4) dans le canal de réception qui est mis en place sur l'arbre creux (6) rotatif et se trouve en l'occurrence entre la lentille et la cloison de séparation (7) ;
- un collimateur laser (12) qui est présent dans le canal d'émission ;
- un élément de déviation (8) dans le canal d'émission qui est mis en place dans l'arbre creux (6) rotatif et se trouve en l'occurrence entre la cloison de séparation (7) et le collimateur laser (12),
- l'arbre creux (8) présentant une ouverture à travers laquelle un rayon laser introduit par le collimateur laser dans l'arbre creux (6) et dévié de 90° par l'élément de déviation pour le canal d'émission est émis ;
- le rayonnement laser (15) réfléchi entrant en liaison opératoire avec la lentille du scanner (3) via la surface de l'élément de déviation (4) pour le canal de réception et tombant dans la zone d'image du photorécepteur (1).

2. Appareil télémétrique laser à balayage selon la revendication 1,
**caractérisé en ce que**
l'élément de déviation pour le canal de réception (4) est muni de zones marginales (5) cylindriques courbées.

3. Appareil télémétrique laser à balayage selon la revendication 1,
**caractérisé en ce que**
les éléments de déviation pour le canal de réception et le canal d'émission (4, 8) possèdent respectivement la forme d'un miroir ou d'un prisme.

4. Appareil télémétrique laser à balayage selon la revendication 3,
**caractérisé en ce que**
les éléments de déviation pour le canal de réception et le canal d'émission (4, 8) sont des prismes pentagonaux.

5. Appareil télémétrique laser à balayage selon la revendication 1,
**caractérisé en ce**
**qu'**un élément de déviation (14) amortisseur est disposé en position centrale, placé au-dessous de la cloison de séparation (7).

6. Appareil télémétrique laser à balayage selon la revendication 1,
**caractérisé en ce**
**qu'**un élément (2) prismatique est prévu devant ou derrière l'élément de déviation pour le canal de réception (4).

7. Appareil télémétrique laser à balayage selon la revendication 1,
**caractérisé en ce que**,
entre la lentille du scanner (3) et l'élément de déviation pour le canal de réception (4), il est disposé un miroir (16) sélectif qui est en liaison opératoire avec une caméra couleur (17).
